# EUROPEAN PATENT SPECIFICATION

(11) **EP 3 730 857 B1**
(45) Date of publication and mention of the grant of the patent: **11.10.2023**
(21) Application number: 17935816.3
(22) Date of filing: 19.12.2017
(51) Int. Cl.: F24F 11/62, F04B 49/10, F24F 11/70, F24F 1/24, F24F 11/86, F24F 11/88, H02P 29/60

(54) **AIR CONDITIONER**
KLIMAANLAGE
CLIMATISEUR

(43) Date of publication of application: 28.10.2020
(73) Proprietor: Mitsubishi Electric Corporation, Tokyo 100-8310 (JP)
(72) Inventor: KOMORI, Atsushi, Tokyo 102-0073 (JP)
(74) Representative: Pfenning, Meinig & Partner mbB
(86) International application number: PCT/JP2017/045587
(87) International publication number: WO 2019/123545

(56) References cited:
- EP-A1- 3 217 539
- EP-A2- 0 866 284
- EP-B1- 0 866 284
- WO-A1-2011/031787
- JP-A- S54 118 640
- JP-A- 2008 202 905
- JP-A- 2014 177 880
- JP-U- S57 185 617
- JP-U- S57 185 617
- US-A1- 2005 029 976
- US-A1- 2008 175 718
- US-A1- 2015 248 123

## Description

### Field

The present invention relates to an air conditioner that performs a protective operation when a motor is abnormally overheated.

### Background

In an air conditioner, a motor is conventionally protected against anomaly overheating due to overcurrent by a microcontroller stopping the motor through a software process. Specifically, in the air conditioner, an overcurrent detector detects that a current flowing through the motor is an overcurrent, and when the overcurrent is detected by the overcurrent detector, the microcontroller stops outputting a control signal to a motor drive element, thereby stopping the motor. Alternatively, in the air conditioner, a thermistor detects a motor shell temperature, the microcontroller acquires a result of the detection by the thermistor, and when the detection result becomes equal to or higher than a threshold, the microcontroller stops outputting the control signal to the motor drive element, thereby stopping the motor.

When surge noise or the like is applied to the microcontroller, and thereby an internal circuit of the microcontroller is damaged, or when a software process in the microcontroller goes out of control, the microcontroller cannot stop the motor when the motor is abnormally overheated. In addition, according to the International Electrotechnical Commission (IEC) standard, a device is required to stop without being damaged even when a protective operation by software becomes invalid. Therefore, it may not be possible to satisfy the standard only with protection by software. In Patent Literature 1, a technique is disclosed in which in a compressor drive device, when a shell temperature of a motor reaches or exceeds a certain temperature, a thermal protector provided on a shell of the motor cuts off supply of power to a motor drive element to stop the motor, and thereby the motor is protected against anomaly overheating without using a microcontroller.

JP S57 185617 U describes a control circuit for an actuator for an air conditioner for a vehicle, and for controlling the motor by detecting the temperature on the surface or the vicinity of a motor constituting the actuator.

EP 0 866 284 A2 describes an air conditioning system equipped with a refrigerating cycle system in which an electric motor is operatively coupled to a compressor driven through an inverter control after converting AC power supplied from an AC power source into a DC power.

### Citation List

### Patent Literature

Patent Literature 1: Japanese Patent Application Laid-open No. 2014-177880

### Summary

### Technical Problem

However, in the protection by hardware using the thermal protector described in Patent Literature 1, it is necessary to select a protection temperature suitable for a motor to be mounted with respect to product specifications of various air conditioners, and consequently, multiple thermal protectors with different specifications are required. When there is no thermal protector with a specification corresponding to the selected protection temperature, a thermal protector with another specification must be used, and reliability of a protective operation is decreased, which is a problem.

In addition, protection by hardware using a thermal protector is susceptible to wiring noise because the thermal protector is connected by providing a contact point on a power supply line and extending the line. In a circuit subsequent to the contact point of the thermal protector, there is a concern about malfunction due to an influence of the wiring noise, so that wiring length needs to be shortened. Therefore, it is necessary to reduce a mounting interval between a substrate on which the thermal protector is mounted and a motor, and accordingly, the arrangement of components in a device is constrained, which is a problem.

The present invention has been made in view of the above, and an object thereof is to obtain an air conditioner capable of improving reliability of a protective operation at an occurrence of anomaly overheating without constraints of the arrangement of components.

### Solution to Problem

This problem is solved by an air conditioner according to claim 1. Further improvements of the air conditioner according to the invention are provided in the dependent claims.

### Advantageous Effects of Invention

The air conditioner according to the present invention achieves an effect that reliability of a protective operation at an occurrence of anomaly overheating can be improved without constraints of the arrangement of components.

### Brief Description of Drawings

FIG. 1 is a block diagram illustrating an example configuration of an air conditioner according to a first embodiment of the invention.
FIG. 2 is a diagram illustrating an example arrangement of a compressor, thermistors, and an outdoor unit substrate in an outdoor unit included in the air conditioner according to the first embodiment.
FIG. 3 is a flowchart illustrating a protective operation against anomaly overheating of the compressor of the outdoor unit according to the first embodiment.
FIG. 4 is a set of diagrams illustrating the contents of the protective operation against anomaly overheating of the compressor of the outdoor unit according to the first embodiment.
FIG. 5 is a block diagram illustrating an example configuration of an air conditioner according to a second embodiment of the invention.
FIG. 6 is a diagram illustrating an example arrangement of the compressor, a thermistor, and an outdoor unit substrate in an outdoor unit included in the air conditioner according to the second embodiment.
FIG. 7 is a block diagram illustrating an example configuration of an air conditioner according to a third embodiment.
FIG. 8 is a flowchart illustrating a protective operation against anomaly overheating of the compressor of an outdoor unit according to the third embodiment of the invention.
FIG. 9 is a set of diagrams illustrating the contents of the protective operation against anomaly overheating of the compressor of the outdoor unit according to the third embodiment.
FIG. 10 is a block diagram illustrating an example configuration of an air conditioner according to a fourth embodiment of the invention.

### Description of Embodiments

Hereinafter, an air conditioner according to embodiments of the present invention will be described in detail with reference to the drawings.

### First Embodiment.

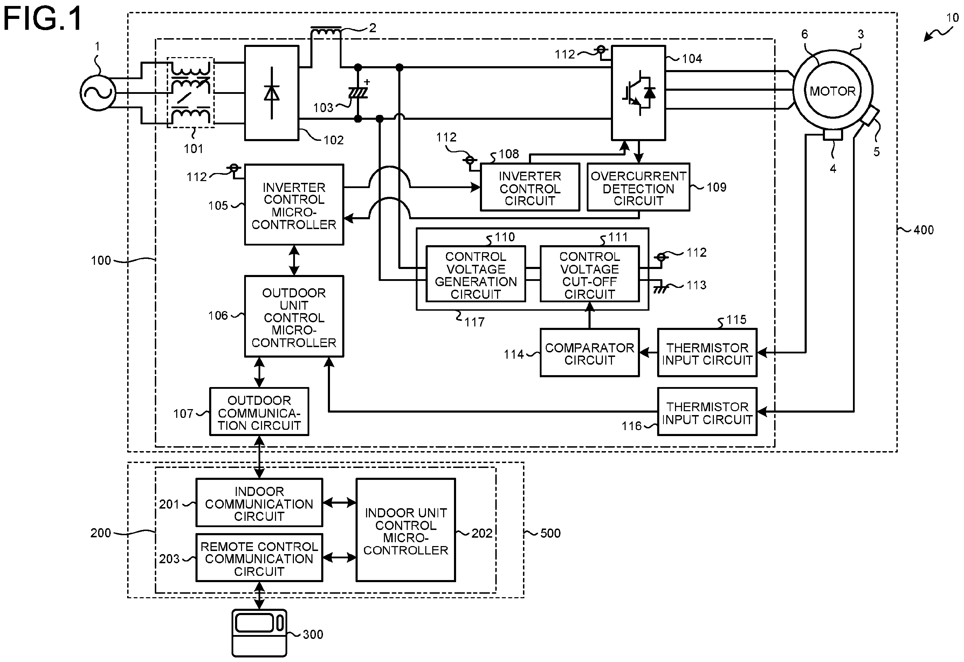

FIG. 1 is a block diagram illustrating an example configuration of an air conditioner 10 according to a first embodiment of the present invention. The air conditioner 10 includes an outdoor unit 400, an indoor unit 500, and a remote controller 300. An alternating-current power supply 1 is connected to the outdoor unit 400.

A configuration of the outdoor unit 400 will be described. The outdoor unit 400 includes a reactor 2, a compressor 3 including a motor 6, thermistors 4 and 5, and an outdoor unit substrate 100. The outdoor unit substrate 100 includes a coil 101, a diode bridge 102, a smoothing capacitor 103, an inverter module 104, an inverter control microcontroller 105, an outdoor unit control microcontroller 106, an outdoor communication circuit 107, an inverter control circuit 108, an overcurrent detection circuit 109, a control voltage generation circuit 110, a control voltage cut-off circuit 111, a comparator circuit 114, and thermistor input circuits 115 and 116. The control voltage generation circuit 110 and the control voltage cut-off circuit 111 constitute a control voltage supply circuit 117.

The coil 101 suppresses noise generated in the outdoor unit substrate 100 included in the alternating-current power supplied from the alternating-current power supply 1. The diode bridge 102, the reactor 2, and the smoothing capacitor 103 constitute a power conversion circuit. The power conversion circuit converts alternating-current power that has passed through the coil 101 into direct-current power, and outputs the direct-current power. The inverter module 104 is a drive element that drives the motor 6 by converting the direct-current power output from the power conversion circuit into alternating-current power, and applying the alternating-current power to the compressor 3, more specifically, the motor 6 included in the compressor 3. The inverter control circuit 108 outputs a control signal to drive the inverter module 104. The overcurrent detection circuit 109 monitors a current flowing through the inverter module 104, and when detecting an overcurrent in anomaly of the compressor 3, that is, the motor 6, the overcurrent detection circuit 109 outputs, to the inverter control microcontroller 105, a signal indicating that the overcurrent has been detected.

The inverter control microcontroller 105 is an inverter control unit that controls the output of the control signal which is output from the inverter control circuit 108 to the inverter module 104. The inverter control microcontroller 105 controls an operation of the inverter module 104 via the inverter control circuit 108. When the inverter control microcontroller 105 acquires, from the overcurrent detection circuit 109, a signal indicating that an overcurrent has been detected, the inverter control microcontroller 105 controls the inverter control circuit 108 to stop the operation of the inverter module 104. The control voltage generation circuit 110 generates an inverter control voltage 112 using the direct-current power output from the power conversion circuit, and outputs the generated inverter control voltage 112 to the control voltage cut-off circuit 111. The inverter module 104, the inverter control microcontroller 105, and the inverter control circuit 108 constitute a drive circuit that controls an operation of the motor 6 or the compressor 3. The drive circuit controls the operation of the compressor 3 or the motor 6 by being supplied with the inverter control voltage 112 from the control voltage generation circuit 110 via the control voltage cut-off circuit 111. The inverter control voltage 112 may be simply referred to as a control voltage. The compressor 3 and the motor 6 may be collectively referred to as a load.

The thermistor 4 is a temperature detection unit that detects a shell temperature of the compressor 3 and outputs a detection value based on the shell temperature. Specifically, the thermistor 4 detects the shell temperature of the compressor 3, converts the detected shell temperature of the compressor 3 into a resistance value, and outputs the resistance value to the thermistor input circuit 115. The thermistor input circuit 115 is a conversion circuit that converts the resistance value input from the thermistor 4 into a voltage value. The thermistor input circuit 115 can convert the resistance value into the voltage value by a general circuit configuration using a shunt resistor or the like. The voltage value converted by the thermistor input circuit 115 is assumed to be a first voltage value. The thermistor input circuit 115 outputs the first voltage value to the comparator circuit 114. The comparator circuit 114 compares the first voltage value with a second voltage value that is a threshold voltage V1 [V] corresponding to a protection temperature T1 [°C] of the compressor 3, and outputs a control signal based on a potential difference between the first voltage value and the second voltage value to the control voltage cut-off circuit 111.

Here, the threshold voltage V1 [V] is a reference voltage corresponding to the first voltage value input from the thermistor input circuit 115 to the comparator circuit 114 when a protection temperature with respect to the shell temperature of the compressor 3 is set at T1 [°C] and the shell temperature of the compressor 3 detected by the thermistor 4 is T1 [°C]. In the first embodiment, the protection temperature T1 [°C] is a temperature used in both cases where the compressor 3 that is being driven is stopped and where the stopped compressor 3 is driven. A designer of the outdoor unit 400 calculates the threshold voltage V1 [V] corresponding to the protection temperature T1 [°C] in advance, and selects a resistance value of a resistor to be mounted on a circuit that generates the second voltage value (not illustrated) on the outdoor unit substrate 100 so that the threshold voltage V1 [V] is input to an input for the second voltage value of the comparator circuit 114. Accordingly, the outdoor unit substrate 100 can easily input the threshold voltage V1 [V] as the second voltage value to the comparator circuit 114.

The control voltage cut-off circuit 111 is connected to an inverter control voltage ground 113. On the basis of the control signal acquired from the comparator circuit 114, the control voltage cut-off circuit 111: supplies the inverter control voltage 112 output from the control voltage generation circuit 110 to the inverter module 104, the inverter control microcontroller 105, and the inverter control circuit 108; or cuts off the supply.

The thermistor 5 is a temperature detection unit that detects a shell temperature of the compressor 3 and outputs a detection value based on the shell temperature. Specifically, the thermistor 5 detects the shell temperature of the compressor 3, converts the detected shell temperature of the compressor 3 into a resistance value, and outputs the resistance value to the thermistor input circuit 116. The thermistor input circuit 116 is a conversion circuit that converts the resistance value input from the thermistor 5 into a voltage value. The thermistor input circuit 116 outputs the converted voltage value to the outdoor unit control microcontroller 106. The converted voltage value is the same voltage value as the first voltage value described above. The outdoor unit control microcontroller 106 is an outdoor unit control unit that monitors the shell temperature of the compressor 3 using the voltage value acquired from the thermistor input circuit 116, and uses information on the shell temperature of the compressor 3 for control during normal operation of the outdoor unit 400.

The outdoor communication circuit 107: outputs information on an operation state of the outdoor unit 400 and the like to the indoor unit 500, specifically, to an indoor communication circuit 201 provided on an indoor unit substrate 200; and acquires, from the indoor communication circuit 201, information on an air conditioning request from a user received by the remote controller 300 and the like. The indoor unit 500 includes the indoor unit substrate 200. The indoor unit substrate 200 includes the indoor communication circuit 201, an indoor unit control microcontroller 202, and a remote control communication circuit 203. The indoor communication circuit 201 outputs the information on the air conditioning request of the user and the like to the outdoor communication circuit 107, and acquires the information on the operation state and the like from the outdoor communication circuit 107. The indoor unit control microcontroller 202 controls an operation of the indoor unit 500. The remote control communication circuit 203 outputs information on an operation state and the like to the remote controller 300 and acquires information on the air conditioning request of the user and the like from the remote controller 300. The remote controller 300 receives the air conditioning request from the user and the like and outputs the air conditioning request and the like to the remote control communication circuit 203. In addition, the remote controller 300 displays the information on the operation state and the like acquired from the remote control communication circuit 203.

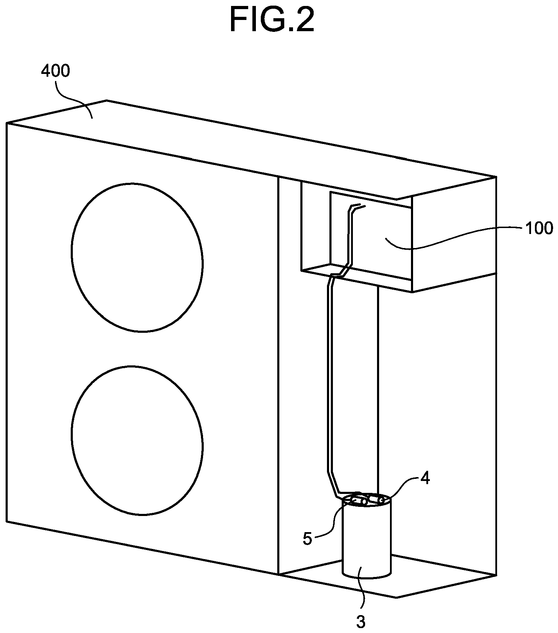

FIG. 2 is a diagram illustrating an example arrangement of the compressor 3, the thermistors 4 and 5, and the outdoor unit substrate 100 in the outdoor unit 400 included in the air conditioner 10 according to the first embodiment. In FIG. 2, the left-hand side of the outdoor unit 400 illustrates the appearance of the outdoor unit 400, and the right-hand side of the outdoor unit 400 illustrates the inside of the outdoor unit 400. The thermistors 4 and 5 are installed on the compressor 3. The thermistors 4 and 5 are connected to the outdoor unit substrate 100 via wiring. As illustrated in FIG. 2, in the outdoor unit 400, it is not necessary to arrange the compressor 3 and the outdoor unit substrate 100 adjacent to each other. Therefore, the designer of the outdoor unit 400 can design the outdoor unit 400 without constraints of the layout of components such as the compressor 3 and the outdoor unit substrate 100.

In the examples of FIGS. 1 and 2, the thermistors 4 and 5 are installed on the shell of the compressor 3 and detect the shell temperature of the compressor 3, but there is no limitation thereto. When the structure of the compressor 3 permits, the thermistors 4 and 5 may be installed directly on the motor 6. That is, the thermistors 4 and 5 may detect a shell temperature of the motor 6 and convert the detected shell temperature of the motor 6 into a resistance value.

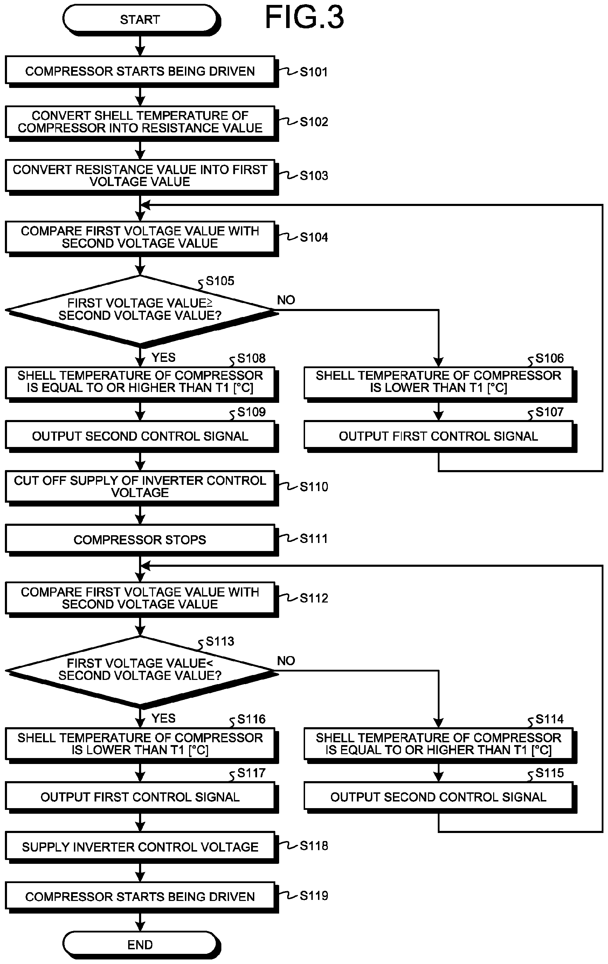

Next, a protective operation against anomaly overheating of the compressor 3 in the outdoor unit 400 of the air conditioner 10 will be described. FIG. 3 is a flowchart illustrating the protective operation against anomaly overheating of the compressor 3 of the outdoor unit 400 according to the first embodiment. When the compressor 3 starts being driven in the outdoor unit 400 (Step S101), the thermistor 4 detects a shell temperature of the compressor 3, and converts the detected shell temperature into a resistance value (Step S102). The thermistor input circuit 115 converts the resistance value acquired from the thermistor 4 into the first voltage value (Step S103). The comparator circuit 114 compares the first voltage value with the second voltage value (Step S104).

If the first voltage value is lower than the second voltage value (Step S105: No), the comparator circuit 114 assumes that the shell temperature of the compressor 3 is lower than the protection temperature T1 [°C] (Step S106), and outputs a control signal instructing to supply the inverter control voltage 112 to the control voltage cut-off circuit 111(Step S107). The control signal instructing to supply the inverter control voltage 112 is assumed to be a first control signal. On the basis of the first control signal acquired from the comparator circuit 114, the control voltage cut-off circuit 111 supplies the inverter control voltage 112 output from the control voltage generation circuit 110 to the inverter module 104, the inverter control microcontroller 105, and the inverter control circuit 108. The compressor 3 is continuously driven under the control of the inverter module 104, the inverter control microcontroller 105, and the inverter control circuit 108. The comparator circuit 114 returns to Step S104 and continues the comparison between the first voltage value and the second voltage value.

If anomaly overheating is caused by a failure or the like of the compressor 3 and the shell temperature of the compressor 3 rises, and thereby the first voltage value becomes equal to or higher than the second voltage value (Step S105: Yes), the comparator circuit 114 assumes that the shell temperature of the compressor 3 is equal to or higher than the protection temperature T1 [°C] (Step S108), and outputs a control signal instructing to cut off the supply of the inverter control voltage 112 to the control voltage cut-off circuit 111 (Step S109). The control signal instructing to cut off the supply of the inverter control voltage 112 is assumed to be a second control signal. On the basis of the second control signal acquired from the comparator circuit 114, the control voltage cut-off circuit 111 cuts off the supply of the inverter control voltage 112 output from the control voltage generation circuit 110 to the inverter module 104, the inverter control microcontroller 105, and the inverter control circuit 108 (Step S110). The inverter module 104, the inverter control microcontroller 105, and the inverter control circuit 108 stop operating because the inverter control voltage 112 is no longer supplied thereto. The compressor 3 stops being driven because the operations of the inverter module 104, the inverter control microcontroller 105, and the inverter control circuit 108 are stopped (Step Sill). Accordingly, the outdoor unit 400 can stop the compressor 3 by the protective operation, and can prevent further anomaly overheating of the compressor 3.

The compressor 3 has thus stopped being driven, and thereby the shell temperature of the compressor 3 drops. The comparator circuit 114 compares the first voltage value with the second voltage value (Step S112). If the first voltage value is equal to or higher than the second voltage value (Step S113: No), the comparator circuit 114 assumes that the shell temperature of the compressor 3 is equal to or higher than the protection temperature T1 [°C] (Step S114), and outputs a second control signal to the control voltage cut-off circuit 111 (Step S115). The comparator circuit 114 returns to Step S112 and continues the comparison between the first voltage value and the second voltage value.

If the first voltage value is lower than the second voltage value (Step S113: Yes), the comparator circuit 114 assumes that the shell temperature of the compressor 3 is lower than the protection temperature T1 [°C] (Step S116), and outputs the first control signal to the control voltage cut-off circuit 111 (Step S117). On the basis of the first control signal acquired from the comparator circuit 114, the control voltage cut-off circuit 111 supplies the inverter control voltage 112 output from the control voltage generation circuit 110 to the inverter module 104, the inverter control microcontroller 105, and the inverter control circuit 108 (Step S118). Accordingly, the inverter module 104, the inverter control microcontroller 105, and the inverter control circuit 108 start operating. The compressor 3 starts being driven under the control of the inverter module 104, the inverter control microcontroller 105, and the inverter control circuit 108 (Step S119). By the supply of the inverter control voltage 112, and an initial startup by power-on reset, the inverter control microcontroller 105 can perform a stable resurgent operation.

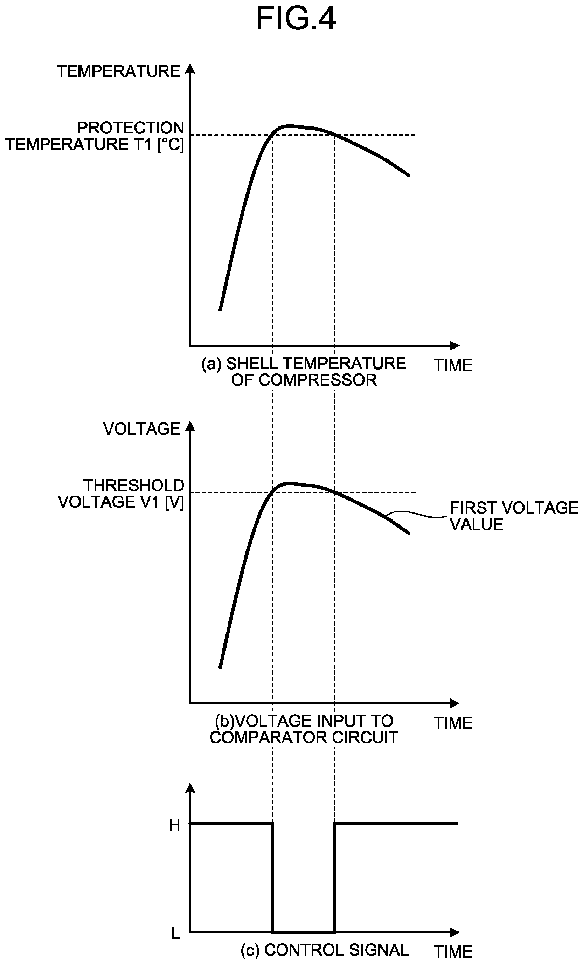

FIG. 4 is a set of diagrams illustrating the contents of the protective operation against anomaly overheating of the compressor 3 of the outdoor unit 400 according to the first embodiment. The horizontal axis of each diagram represents time. FIG. 4(a) illustrates the shell temperature of the compressor 3 detected by the thermistor 4. The vertical axis represents temperature. FIG. 4(b) illustrates a voltage value input to the comparator circuit 114 from the thermistor input circuit 115, that is, the first voltage value. The vertical axis represents voltage. FIG. 4(c) illustrates a control signal output by the comparator circuit 114 to the control voltage cut-off circuit 111. Here, high (H) indicates a state where the first control signal is output, and low (L) indicates a state where the second control signal is output. As described above, the threshold voltage V1 [V] is a reference voltage corresponding to the first voltage value input from the thermistor input circuit 115 to the comparator circuit 114 when the shell temperature of the compressor 3 detected by the thermistor 4 is the protection temperature T1 [°C]. The comparator circuit 114 outputs the first control signal when the first voltage value is lower than the second voltage value, and outputs the second control signal when the first voltage value becomes equal to or higher than the second voltage value. When the compressor 3 stops being driven and accordingly the shell temperature of the compressor 3 drops and the first voltage value becomes lower than the second voltage value, the comparator circuit 114 outputs the first control signal.

As described above, according to the first embodiment, in the outdoor unit 400 in the air conditioner 10: the thermistor 4 provided on the shell of the compressor 3 converts the shell temperature of the compressor 3 into the resistance value; the thermistor input circuit 115 converts the resistance value into the first voltage value; and the comparator circuit 114 outputs the control signal based on the potential difference obtained by comparing the first voltage value with the second voltage value corresponding to the protection temperature T1 [°C], and thereby the outdoor unit 400 controls the supply of the control voltage from the control voltage supply circuit 117. When the first voltage value is equal to or higher than the second voltage value, the control voltage supply circuit 117 cuts off the supply of the inverter control voltage 112 to stop driving the compressor 3. Accordingly, the outdoor unit 400 can protect the compressor 3 with a hardware circuit having a simple configuration without going through a software process in a microcontroller when anomaly overheating occurs in the compressor 3, and the reliability of the protective operation at the occurrence of anomaly overheating can be improved. In addition, when the temperature of the compressor 3 drops after the compressor 3 is stopped by the protective operation against anomaly overheating, the outdoor unit 400 can automatically start supplying the inverter control voltage 112 by the hardware circuit to start driving the compressor 3.

In the outdoor unit 400, the second voltage value can be set and changed easily and inexpensively with a resistance value on the outdoor unit substrate 100. Accordingly, the designer of the outdoor unit 400 can set an optimal protection temperature depending on the specifications of the compressor 3 to be mounted on the outdoor unit 400. In addition, the designer of the outdoor unit 400 can design the outdoor unit 400 without constraints of the layout of components such as the compressor 3 and the outdoor unit substrate 100.

### Second Embodiment.

In the first embodiment, the outdoor unit 400 includes the thermistor 4 and the thermistor input circuit 115 for the protection against anomaly overheating of the compressor 3 separately from the thermistor 5 and the thermistor input circuit 116 used for operation control at normal times. In a second embodiment, an outdoor unit uses one thermistor and one thermistor input circuit for the operation control at normal times and also for the protection against anomaly overheating of the compressor 3. Differences from the first embodiment will be described.

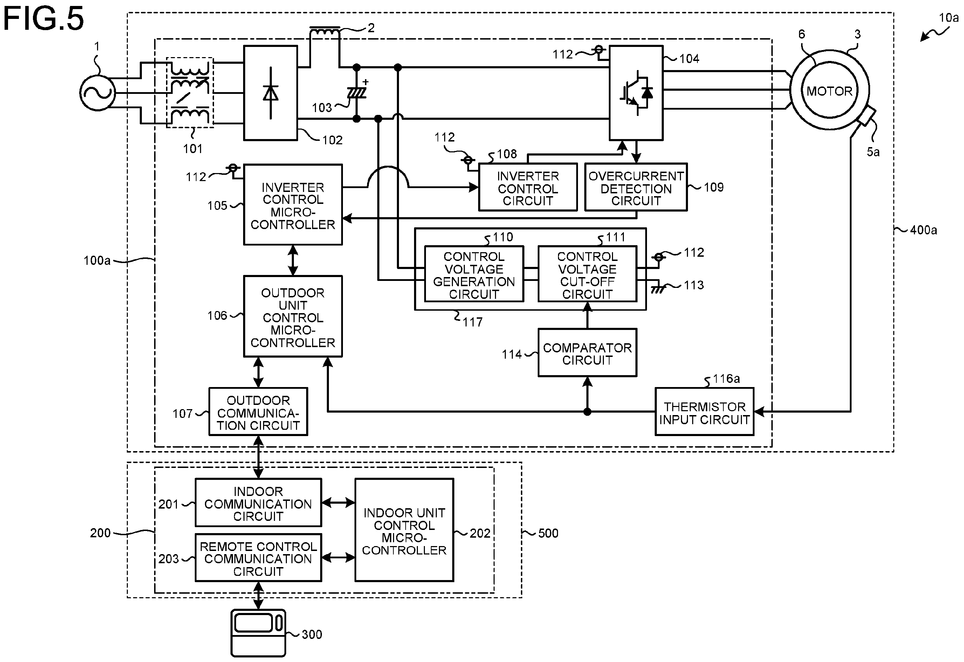

FIG. 5 is a block diagram illustrating an example configuration of an air conditioner 10a according to the second embodiment. The air conditioner 10a according to the second embodiment is obtained by replacing the outdoor unit 400 of the air conditioner 10 of the first embodiment with an outdoor unit 400a. The outdoor unit 400a is obtained by removing the thermistors 4 and 5 and the outdoor unit substrate 100 from the outdoor unit 400 of the first embodiment and adding a thermistor 5a and an outdoor unit substrate 100a thereto. The outdoor unit substrate 100a is obtained by removing the thermistor input circuits 115 and 116 from the outdoor unit substrate 100 of the first embodiment and adding a thermistor input circuit 116a thereto. Similarly to the thermistors 4 and 5 of the first embodiment, the thermistor 5a is a temperature detection unit that detects a shell temperature of the compressor 3 and outputs a detection value based on the shell temperature. Specifically, the thermistor 5a detects the shell temperature of the compressor 3, converts the detected shell temperature of the compressor 3 into a resistance value, and outputs the resistance value to the thermistor input circuit 116a. The thermistor input circuit 116a is a conversion circuit that converts the resistance value input from the thermistor 5a into a voltage value. The thermistor input circuit 116a outputs the converted voltage value, that is, a first voltage value, to the comparator circuit 114 and the outdoor unit control microcontroller 106.

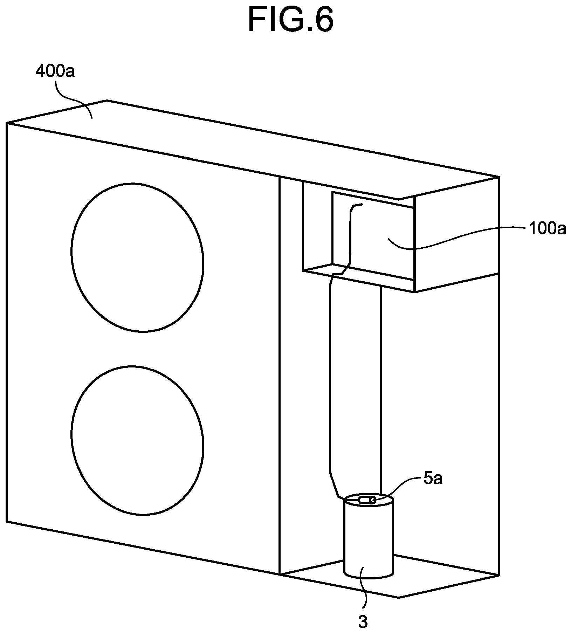

FIG. 6 is a diagram illustrating an example arrangement of the compressor 3, the thermistor 5a, and the outdoor unit substrate 100a in the outdoor unit 400a included in the air conditioner 10a according to the second embodiment. In FIG. 6, the left-hand side of the outdoor unit 400a illustrates the appearance of the outdoor unit 400a, and the right-hand side of the outdoor unit 400a illustrates the inside of the outdoor unit 400a. The thermistor 5a is installed on the compressor 3. The thermistor 5a is connected to the outdoor unit substrate 100a via wiring. As illustrated in FIG. 6, in the outdoor unit 400a, it is not necessary to arrange the compressor 3 and the outdoor unit substrate 100a adjacent to each other. Therefore, a designer of the outdoor unit 400a can design the outdoor unit 400a without constraints of the layout of components such as the compressor 3 and the outdoor unit substrate 100a.

In the examples of FIGS. 5 and 6, the thermistor 5a is installed on the shell of the compressor 3 and detects the shell temperature of the compressor 3, but there is no limitation thereto. When the structure of the compressor 3 permits, the thermistor 5a may be installed directly on the motor 6. That is, the thermistor 5a may detect a shell temperature of the motor 6 and convert the detected shell temperature of the motor 6 into a resistance value.

A protective operation against anomaly overheating of the compressor 3 in the outdoor unit 400a of the air conditioner 10a is similar to the protective operation against anomaly overheating of the compressor 3 in the outdoor unit 400 of the air conditioner 10 of the first embodiment. In the second embodiment, the thermistor 4 in the description of the flowchart of the first embodiment illustrated in FIG. 3 is replaced with the thermistor 5a, and the thermistor input circuit 115 therein is replaced with the thermistor input circuit 116a.

As described above, according to the second embodiment, in the outdoor unit 400a in the air conditioner 10a, the thermistor input circuit 116a outputs the first voltage value to the comparator circuit 114 and the outdoor unit control microcontroller 106, and thereby a set of thermistor 5a and thermistor input circuit 116a is used for the operation control at normal times and also used for the protective operation against anomaly overheating of the compressor 3. Accordingly, the outdoor unit 400a can achieve an effect similar to that of the outdoor unit 400 of the first embodiment, and can reduce the number of components as compared to the outdoor unit 400 of the first embodiment.

### Third Embodiment.

In the first embodiment, in the outdoor unit 400, the protection temperature at which the supply of the inverter control voltage 112 is cut off when the compressor 3 is abnormally overheated, and a resurgent temperature at which the supply of the inverter control voltage 112 is resumed after the temperature of the compressor 3 has dropped are the same, i.e., T1 [°C]. In a third embodiment, the protection temperature and the resurgent temperature are different from each other. Differences from the first embodiment will be described below.

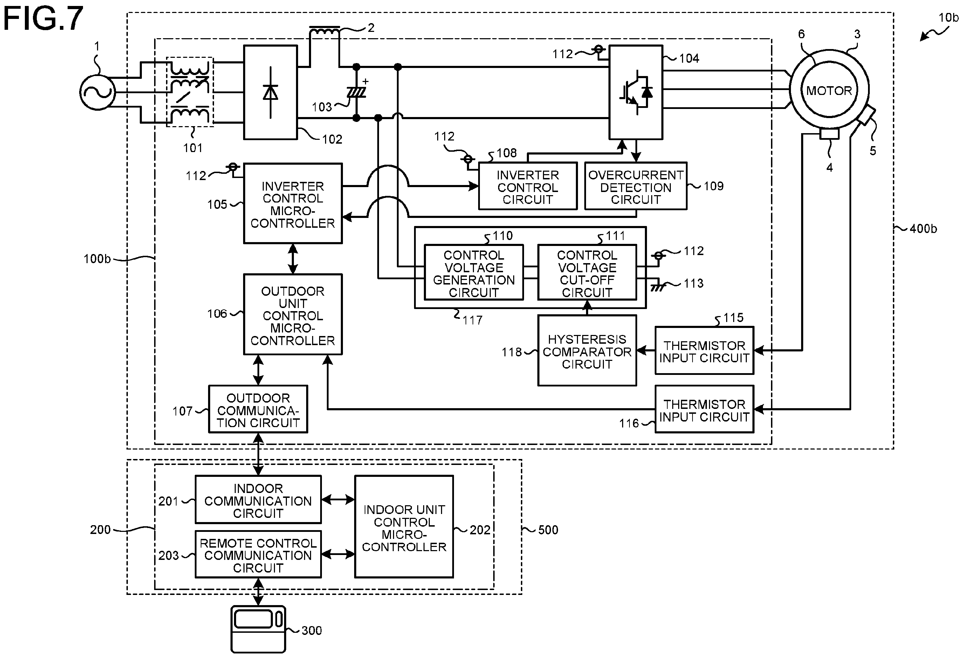

FIG. 7 is a block diagram illustrating an example configuration of an air conditioner 10b according to the third embodiment. The air conditioner 10b according to the third embodiment is obtained by replacing the outdoor unit 400 of the air conditioner 10 of the first embodiment with an outdoor unit 400b. The outdoor unit 400b is obtained by replacing the outdoor unit substrate 100 of the outdoor unit 400 of the first embodiment with an outdoor unit substrate 100b. The outdoor unit substrate 100b is obtained by replacing the comparator circuit 114 of the outdoor unit substrate 100 of the first embodiment with a hysteresis comparator circuit 118. The hysteresis comparator circuit 118 compares a first voltage value acquired from the thermistor input circuit 115 with a second voltage value, and outputs a control signal based on a potential difference between the first voltage value and the second voltage value to the control voltage cut-off circuit 111. In addition, after the first voltage value becomes equal to or higher than the second voltage value and the hysteresis comparator circuit 118 outputs a second control signal, the hysteresis comparator circuit 118 compares the first voltage value with a third voltage value that is a threshold voltage V2 [V] corresponding to a resurgent temperature T2 [°C] of the compressor 3, and outputs a control signal based on a potential difference between the first voltage value and the third voltage value to the control voltage cut-off circuit 111. The hysteresis comparator circuit 118 may be simply referred to as a comparator circuit.

Here, the threshold voltage V2 [V] is a reference voltage corresponding to the first voltage value input from the thermistor input circuit 115 to the hysteresis comparator circuit 118 when the resurgent temperature with respect to the shell temperature of the compressor 3 is set at T2 [°C] and the shell temperature of the compressor 3 detected by the thermistor 4 is T2 [°C]. The protection temperature T1 [°C]>the resurgent temperature T2 [°C], and the threshold voltage V1 [V]>the threshold voltage V2 [V] are established. In the third embodiment, the protection temperature T1 [°C] is a temperature used in a case where the compressor 3 that is being driven is stopped, and the resurgent temperature T2 [°C] is a temperature used in a case where the stopped compressor 3 is driven. A designer of the outdoor unit 400b calculates the threshold voltage V2 [V] corresponding to the resurgent temperature T2 [°C] in advance, and selects a resistance value of a resistor to be mounted on a circuit that generates a third voltage value (not illustrated) on the outdoor unit substrate 100b so that the threshold voltage V2 [V] is input to an input for the third voltage value of the hysteresis comparator circuit 118. Accordingly, the outdoor unit substrate 100b can easily input the threshold voltage V2 [V] as the third voltage value to the hysteresis comparator circuit 118.

An example arrangement of the compressor 3, the thermistors 4 and 5, and the outdoor unit substrate 100b in the outdoor unit 400b is similar to the example arrangement of the compressor 3, the thermistors 4 and 5, and the outdoor unit substrate 100 in the outdoor unit 400 of the first embodiment illustrated in FIG. 2.

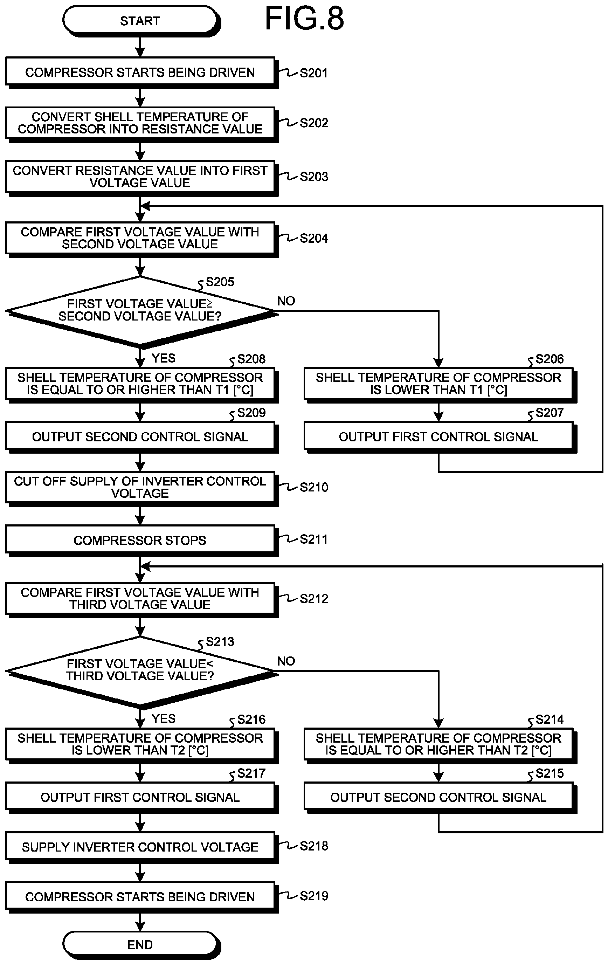

Next, a protective operation against anomaly overheating of the compressor 3 in the outdoor unit 400b of the air conditioner 10b will be described. In the third embodiment, in the outdoor unit 400b, after the compressor 3 has been stopped due to abnormal overheating, a temperature that is used when restarting the compressor 3 as the temperature of the compressor 3 has dropped is different from such a temperature in the first embodiment. FIG. 8 is a flowchart illustrating the protective operation against anomaly overheating of the compressor 3 of the outdoor unit 400b according to the third embodiment. When the compressor 3 starts being driven in the outdoor unit 400b (Step S201), the thermistor 4 detects a shell temperature of the compressor 3, and converts the detected shell temperature into a resistance value (Step S202). The thermistor input circuit 115 converts the resistance value acquired from the thermistor 4 into the first voltage value (Step S203). The hysteresis comparator circuit 118 compares the first voltage value with the second voltage value (Step S204).

If the first voltage value is lower than the second voltage value (Step S205: No), the hysteresis comparator circuit 118 assumes that the shell temperature of the compressor 3 is lower than the protection temperature T1 [°C] (Step S206), and outputs a first control signal to the control voltage cut-off circuit 111 (Step S207). On the basis of the first control signal acquired from the hysteresis comparator circuit 118, the control voltage cut-off circuit 111 supplies the inverter control voltage 112 output from the control voltage generation circuit 110 to the inverter module 104, the inverter control microcontroller 105, and the inverter control circuit 108. The compressor 3 is continuously driven under the control of the inverter module 104, the inverter control microcontroller 105, and the inverter control circuit 108. The hysteresis comparator circuit 118 returns to Step S204 and continues the comparison between the first voltage value and the second voltage value.

If anomaly overheating is caused by a failure or the like of the compressor 3 and the shell temperature of the compressor 3 rises, and thereby the first voltage value becomes equal to or higher than the second voltage value (Step S205: Yes), the hysteresis comparator circuit 118 assumes that the shell temperature of the compressor 3 is equal to or higher than the protection temperature T1 [°C] (Step S208), and outputs the second control signal to the control voltage cut-off circuit 111 (Step S209). On the basis of the second control signal acquired from the hysteresis comparator circuit 118, the control voltage cut-off circuit 111 cuts off the supply of the inverter control voltage 112 output from the control voltage generation circuit 110 to the inverter module 104, the inverter control microcontroller 105, and the inverter control circuit 108 (Step S210). The inverter module 104, the inverter control microcontroller 105, and the inverter control circuit 108 stop operating because the inverter control voltage 112 is no longer supplied thereto. The compressor 3 stops operating because the operations of the inverter module 104, the inverter control microcontroller 105, and the inverter control circuit 108 are stopped (Step S211). Accordingly, the outdoor unit 400b can stop the compressor 3 by the protective operation, and can prevent further anomaly overheating of the compressor 3.

The compressor 3 has thus stopped being driven, and thereby the shell temperature of the compressor 3 drops. The hysteresis comparator circuit 118 compares the first voltage value with the third voltage value (Step S212). If the first voltage value is equal to or higher than the third voltage value (Step S213: No), the hysteresis comparator circuit 118 assumes that the shell temperature of the compressor 3 is equal to or higher than the resurgent temperature T2 [°C] (Step S214), and outputs the second control signal to the control voltage cut-off circuit 111 (Step S215). The hysteresis comparator circuit 118 returns to Step S212 and continues the comparison between the first voltage value and the third voltage value.

If the first voltage value is lower than the third voltage value (Step S213: Yes), the hysteresis comparator circuit 118 assumes that the shell temperature of the compressor 3 is lower than the resurgent temperature T2 [°C] (Step S216), and outputs the first control signal to the control voltage cut-off circuit 111 (Step S217). On the basis of the first control signal acquired from the hysteresis comparator circuit 118, the control voltage cut-off circuit 111 supplies the inverter control voltage 112 output from the control voltage generation circuit 110 to the inverter module 104, the inverter control microcontroller 105, and the inverter control circuit 108 (Step S218). Accordingly, the inverter module 104, the inverter control microcontroller 105, and the inverter control circuit 108 start operating. The compressor 3 starts being driven under the control of the inverter module 104, the inverter control microcontroller 105, and the inverter control circuit 108 (Step S219). By the supply of the inverter control voltage 112, and an initial startup by power-on reset, the inverter control microcontroller 105 can perform a stable resurgent operation.

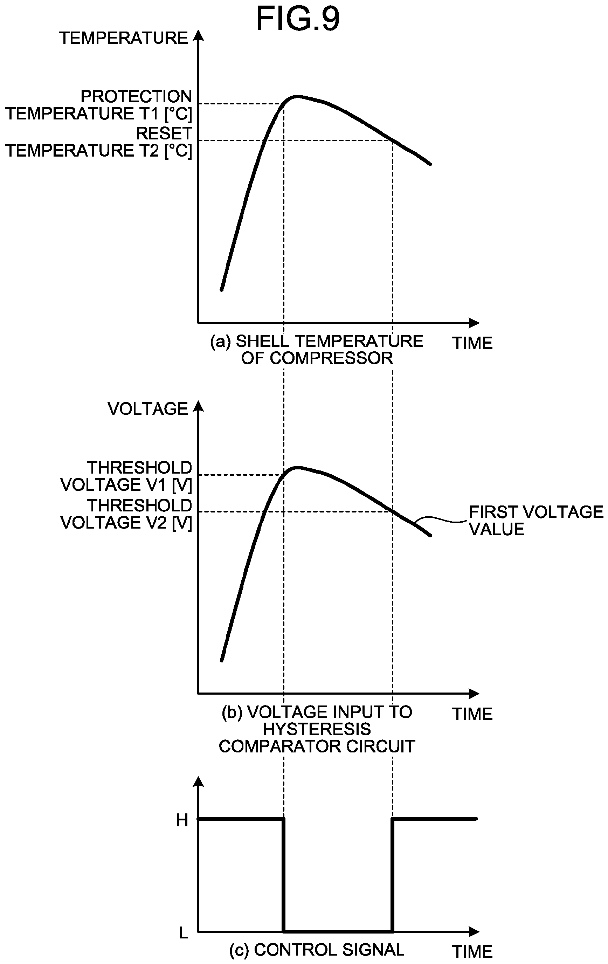

FIG. 9 is a set of diagrams illustrating the contents of the protective operation against anomaly overheating of the compressor 3 of the outdoor unit 400b according to the third embodiment. The horizontal axis of each diagram represents time. FIG. 9(a) illustrates the shell temperature of the compressor 3 detected by the thermistor 4. The vertical axis represents temperature. FIG. 9(b) illustrates a voltage value input to the hysteresis comparator circuit 118 from the thermistor input circuit 115, that is, the first voltage value. The vertical axis represents voltage. FIG. 9(c) illustrates a control signal output from the hysteresis comparator circuit 118 to the control voltage cut-off circuit 111. Here, high (H) indicates a state where the first control signal is output, and low (L) indicates a state where the second control signal is output. As described above, the threshold voltage V1 [V] is a reference voltage corresponding to the first voltage value input from the thermistor input circuit 115 to the hysteresis comparator circuit 118 when the shell temperature of the compressor 3 detected by the thermistor 4 is the protection temperature T1 [°C]. The threshold voltage V2 [V] is a reference voltage corresponding to the first voltage value input from the thermistor input circuit 115 to the hysteresis comparator circuit 118 when the shell temperature of the compressor 3 detected by the thermistor 4 is the resurgent temperature T2 [°C]. After the compressor 3 starts being driven, the hysteresis comparator circuit 118 outputs the first control signal when the first voltage value is lower than the second voltage value, and outputs the second control signal when the first voltage value becomes equal to or higher than the second voltage value. After the hysteresis comparator circuit 118 outputs the second control signal, when the compressor 3 stops being driven and accordingly the shell temperature of the compressor 3 drops and the first voltage value becomes lower than the third voltage value, the hysteresis comparator circuit 118 outputs the first control signal.

As described above, according to the third embodiment, in the outdoor unit 400b in the air conditioner 10b, the hysteresis comparator circuit 118 outputs the control signal based on the potential difference obtained by comparing the first voltage value with the second voltage value corresponding to the protection temperature T1 [°C], and thereby the supply of the control voltage from the control voltage supply circuit 117 is controlled. When the first voltage value is equal to or higher than the second voltage value corresponding to the protection temperature T1 [°C], the control voltage supply circuit 117 cuts off the supply of the inverter control voltage 112 to stop driving the compressor 3. In addition, when the temperature of the compressor 3 drops after being stopped by the protective operation against anomaly overheating, specifically, when the first voltage value becomes lower than the third voltage value corresponding to the resurgent temperature T2 [°C], the supply of the inverter control voltage 112 is automatically started by the hardware circuit, and the compressor 3 starts being driven. By providing a hysteresis width between the protection temperature T1 [°C] at which the supply of the inverter control voltage 112 is cut off and the resurgent temperature T2 [°C], the outdoor unit 400b can restart driving the compressor 3 in a state where the shell temperature of the compressor 3 has dropped to the resurgent temperature T2 [°C], and can avoid a situation where an unstable operation in which driving of the compressor 3 is stopped and restarted in a short time is repeatedly performed.

In the outdoor unit 400b, the third voltage value can be set and changed easily and inexpensively with a resistance value on the outdoor unit substrate 100b. Accordingly, the designer of the outdoor unit 400b can set an optimal protection temperature depending on the specifications of the compressor 3 to be mounted on the outdoor unit 400b. In addition, the designer of the outdoor unit 400b can design the outdoor unit 400b without constraints of the layout of components such as the compressor 3 and the outdoor unit substrate 100b.

### Fourth Embodiment.

In the second embodiment, in the outdoor unit 400a, the protection temperature at which the supply of the inverter control voltage 112 is cut off when the compressor 3 is abnormally overheated, and the resurgent temperature at which the supply of the inverter control voltage 112 is resumed after the temperature of the compressor 3 has dropped are the same, i.e., T1 [°C]. In a fourth embodiment, the protection temperature and the resurgent temperature are different from each other. Differences from the second embodiment and the third embodiment will be described below.

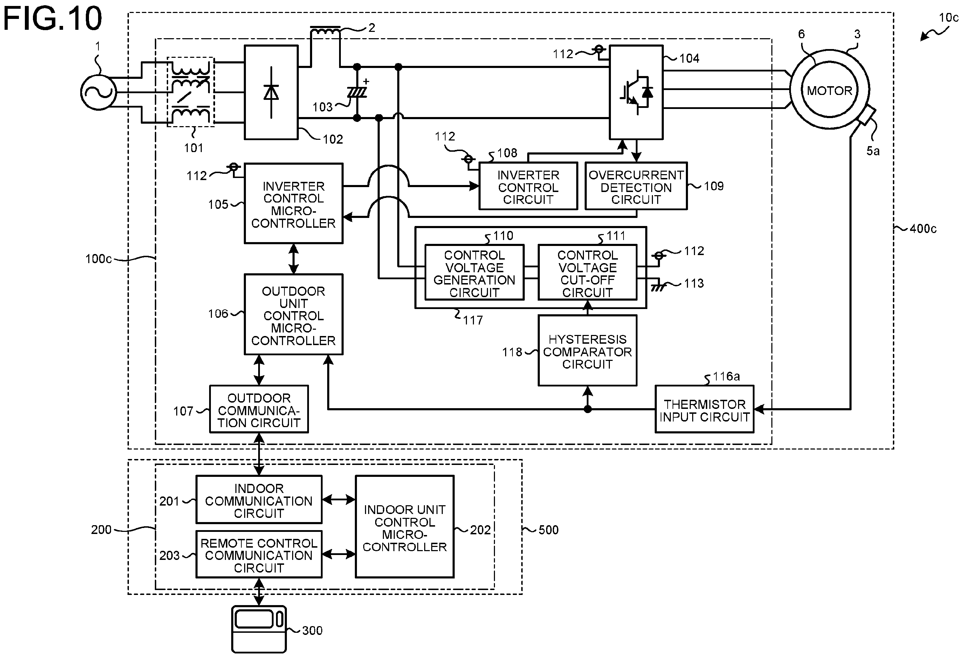

FIG. 10 is a block diagram illustrating an example configuration of an air conditioner 10c according to the fourth embodiment. The air conditioner 10c according to the fourth embodiment is obtained by replacing the outdoor unit 400a of the air conditioner 10a of the second embodiment with an outdoor unit 400c. The outdoor unit 400c is obtained by replacing the outdoor unit substrate 100a of the outdoor unit 400a of the second embodiment with an outdoor unit substrate 100c. The outdoor unit substrate 100c is obtained by replacing the comparator circuit 114 of the outdoor unit substrate 100a of the second embodiment with the hysteresis comparator circuit 118. The hysteresis comparator circuit 118 compares a first voltage value acquired from the thermistor input circuit 116a with a second voltage value, and outputs a control signal based on a potential difference between the first voltage value and the second voltage value to the control voltage cut-off circuit 111. In addition, after the first voltage value becomes equal to or higher than the second voltage value and the hysteresis comparator circuit 118 outputs a second control signal, the hysteresis comparator circuit 118 compares the first voltage value with a third voltage value that is the threshold voltage V2 [V] corresponding to the resurgent temperature T2 [°C] of the compressor 3, and outputs a control signal based on a potential difference between the first voltage value and the third voltage value to the control voltage cut-off circuit 111.

In the fourth embodiment, in the outdoor unit 400c, after the compressor 3 has been stopped due to anomaly overheating, a temperature that is used when restarting the compressor 3 as the temperature of the compressor 3 has dropped is different from such a temperature in the second embodiment. Other operations in the outdoor unit 400c are similar to those in the outdoor unit 400a of the second embodiment. In the fourth embodiment, the thermistor 4 in the description of the flowchart of the third embodiment illustrated in FIG. 8 is replaced with the thermistor 5a, and the thermistor input circuit 115 therein is replaced with the thermistor input circuit 116a. An example arrangement of the compressor 3, the thermistor 5a, and the outdoor unit substrate 100c in the outdoor unit 400c is similar to the example arrangement of the compressor 3, the thermistor 5a, and the outdoor unit substrate 100a in the outdoor unit 400a of the second embodiment illustrated in FIG. 6.

As described above, according to the fourth embodiment, in the outdoor unit 400c in the air conditioner 10c, the thermistor input circuit 116a outputs the first voltage value to the hysteresis comparator circuit 118 and the outdoor unit control microcontroller 106, and thereby a set of thermistor 5a and thermistor input circuit 116a is used for the operation control at normal times and also used for the protective operation against anomaly overheating of the compressor 3. Accordingly, the outdoor unit 400c can achieve an effect similar to that of the outdoor unit 400b of the third embodiment, and can reduce the number of components as compared to the outdoor unit 400b of the third embodiment.

In each of the first to fourth embodiments, the air conditioner uses the inverter module 104, the inverter control microcontroller 105, and the inverter control circuit 108 as an object to be cut off by the control voltage supply circuit 117 from the supply of the inverter control voltage 112 in the protective operation at an occurrence of anomaly overheating, but the use thereof is merely an example, and any one of them may be used as such an object. By cutting off the supply of the inverter control voltage 112 to one of the inverter module 104, the inverter control microcontroller 105, and the inverter control circuit 108, the air conditioner can stop driving the compressor 3, that is, the motor 6, and can achieve a similar effect.

In each of the first to fourth embodiments, the air conditioner uses the compressor 3 as an object to be protected at an occurrence of anomaly overheating, but the use thereof is merely an example, and a fan motor, a pump, or the like may be used as an object to be protected as long as it is a product that drives the motor 6 using the inverter module 104. Even when using such a fan motor, a pump, or the like as an object to be protected, the air conditioner can achieve an effect similar to that obtained in the protection against anomaly overheating of the compressor 3 described in each of the first to fourth embodiments.

### Reference Signs List

1 alternating-current power supply; 2 reactor; 3 compressor; 4, 5, 5a thermistor; 6 motor; 10, 10a, 10b, 10c air conditioner; 100, 100a, 100b, 100c outdoor unit substrate; 101 coil; 102 diode bridge; 103 smoothing capacitor; 104 inverter module; 105 inverter control microcontroller; 106 outdoor unit control microcontroller; 107 outdoor communication circuit; 108 inverter control circuit; 109 overcurrent detection circuit; 110 control voltage generation circuit; 111 control voltage cut-off circuit; 112 inverter control voltage; 113 inverter control voltage ground; 114 comparator circuit; 115, 116, 116a thermistor input circuit; 117 control voltage supply circuit; 118 hysteresis comparator circuit; 200 indoor unit substrate; 201 indoor communication circuit; 202 indoor unit control microcontroller; 203 remote control communication circuit; 300 remote controller; 400, 400a, 400b, 400c outdoor unit; 500 indoor unit.

## Claims

1. An air conditioner (10) comprising:
a power conversion circuit (2, 102,103) to convert alternating-current power into direct-current power;
a drive circuit (104, 105, 108) to convert the direct-current power into alternating-current power, to supply the alternating-current power to a load (3, 6), and to control an operation of the load (3, 6);
a temperature detection unit (4, 5) to detect a shell temperature of the load (3, 6) and to output a detection value based on the shell temperature;
a conversion circuit (115, 116, 116a ) to convert the detection value into a first voltage value;
a comparator circuit (114, 118) to compare the first voltage value with a second voltage value that is a threshold voltage, and to output a control signal based on a potential difference between the first voltage value and the second voltage value; and
a control voltage supply circuit (117) configured to generate a control voltage to be supplied to the drive circuit (104, 105, 108) using the direct-current power, and to control supply of the control voltage (112) to the drive circuit (104, 105, 108) on a basis of the control signal, wherein the load is a motor (6), and the control voltage supply circuit (117) is configured such that on a basis of a shell temperature of the motor (6), driving of the motor (6) is stopped by cutting off the supply of the control voltage (112) to the drive circuit (104, 105, 108), or the motor (6) is driven by supplying the control voltage (112) to the drive circuit (104, 105, 108),
wherein the conversion circuit (115, 116, 116a) outputs the first voltage value to an outdoor unit control unit (106) that controls an operation of an outdoor unit (400a, 400c) on which the motor (6) is mounted, and the comparator circuit(114, 118).

2. The air conditioner (10) according to claim 1, wherein
when the first voltage value is lower than the second voltage value, the comparator circuit (114) outputs a first control signal that is a control signal instructing to supply the control voltage (112), and when the first voltage value is equal to or higher than the second voltage value, the comparator circuit (114) outputs a second control signal that is a control signal instructing to cut off the supply of the control voltage (112).

3. The air conditioner (10) according to claim 1 , wherein
after acquisition of the first voltage value from the conversion circuit (115, 116) is started:
when the first voltage value is lower than the second voltage value, the comparator circuit (114, 118) outputs a first control signal that is a control signal instructing to supply the control voltage (112);
when the first voltage value is equal to or higher than the second voltage value, the comparator circuit (114, 118) outputs a second control signal that is a control signal instructing to cut off the supply of the control voltage(112); and
after the output of the second control signal, when the first voltage value becomes lower than a third voltage value that is a threshold voltage lower than the second voltage value, the comparator circuit (114, 118) outputs the first control signal.

4. The air conditioner (10) according to claim 2 or 3, wherein
driving of the load (3, 6) is stopped by
the drive circuit (104, 105, 108) comprising an inverter module (104) to convert direct-current power into alternating-current power and to supply the alternating-current power to the load(3,6), and
the control voltage supply circuit (117) cutting off the supply of the control voltage (112) to the inverter module (104) when acquiring the second control signal.

5. The air conditioner (10) according to claim 2 or 3, wherein
driving of the load (3,6) is stopped by:
the drive circuit (104, 105, 108) comprising
an inverter module (104) to convert direct-current power into alternating-current power and to supply the alternating-current power to the load(3, 6), and
an inverter control unit to control the inverter module(104); and
the control voltage supply circuit(117) cutting off the supply of the control voltage (112) to the inverter control unit when acquiring the second control signal.

6. The air conditioner (10) according to claim 5, wherein
when the control voltage supply circuit (117) acquires the first control signal after acquiring the second control signal, the control voltage supply circuit (117) supplies the control voltage (112) to the inverter control unit, and
when the control voltage (112) is supplied after the supply of the control voltage (112) is cut off, the inverter control unit performs an initial startup process by power-on reset.

## Patentansprüche

1. Klimaanlage (10), umfassend:
eine Energie-Wandlerschaltung (2, 102, 103), um Wechselstrom in Gleichstrom umzuwandeln;
eine Steuerschaltung (104, 105, 108), um den Gleichstrom in Wechselstrom umzuwandeln, den Wechselstrom einer Last (3, 6) zuzuführen und einen Betrieb der Last (3, 6) zu steuern;
eine Temperaturerfassungseinheit (4, 5), um eine Mantel-Temperatur der Last (3, 6) zu erfassen, und einen Erfassungswert auf der Grundlage der Mantel-Temperatur auszugeben;
eine Wandlerschaltung (115, 116, 116a), um den Erfassungswert in einen ersten Spannungswert umzuwandeln;
eine Komparatorschaltung (114, 118), um den ersten Spannungswert mit einem zweiten Spannungswert, der eine Schwellenspannung ist, zu vergleichen, und ein Steuersignal auf der Grundlage einer Potentialdifferenz zwischen dem ersten Spannungswert und dem zweiten Spannungswert auszugeben; und
eine Steuerspannungs-Zuführungsschaltung (117), die eingerichtet ist, eine Steuerspannung, welche der Steuerschaltung (104, 105, 108) zuzuführen ist, unter Verwendung des Gleichstroms zu erzeugen, und Zufuhr der Steuerspannung (112) zu der Steuerschaltung (104, 105, 108) auf der Grundlage des Steuersignals zu steuern, wobei
die Last ein Motor (6) ist, und die Steuerspannungs-Zuführungsschaltung (117) so eingerichtet ist, dass
auf der Grundlage einer Mantel-Temperatur des Motors (6) der Antrieb des Motors (6) gestoppt wird, indem die Zufuhr der Steuerspannung (112) zu der Steuerschaltung (104, 105, 108) unterbrochen wird, oder der Motor (6) durch Zufuhr der Steuerspannung (112) zu der Steuerschaltung (104, 105, 108) angetrieben wird,
wobei die Wandlerschaltung (115, 116, 116a) den ersten Spannungswert an eine Außeneinheit-Steuereinheit (106), die einen Betrieb einer Außeneinheit (400a, 400c) steuert, an welcher der Motor (6) angebracht ist, und an die Komparatorschaltung (114, 118) ausgibt.

2. Klimaanlage (10) nach Anspruch 1, wobei
wenn der erste Spannungswert niedriger ist als der zweite Spannungswert, die Komparatorschaltung (114) ein erstes Steuersignal ausgibt, bei dem es sich um ein Steuersignal handelt, das anweist, die Steuerspannung (112) zuzuführen, und wenn der erste Spannungswert gleich oder höher ist als der zweite Spannungswert, die Komparatorschaltung (114) ein zweites Steuersignal ausgibt, bei dem es sich um ein Steuersignal handelt, das anweist, die Zufuhr der Steuerspannung (112) zu unterbrechen.

3. Klimaanlage (10) nach Anspruch 1, wobei
nach Erwerb des ersten Spannungswerts von der Wandlerschaltung (115, 116) gestartet wird:
wenn der erste Spannungswert niedriger ist als der zweite Spannungswert, die Komparatorschaltung (114, 118) ein erstes Steuersignal ausgibt, das ein Steuersignal ist, das anweist, die Steuerspannung (112) zuzuführen;
wenn der erste Spannungswert gleich oder höher ist als der zweite Spannungswert, die Komparatorschaltung (114, 118) ein zweites Steuersignal ausgibt, das ein Steuersignal ist, das anweist, die Zufuhr der Steuerspannung (112) zu unterbrechen; und
nach der Ausgabe des zweiten Steuersignals, wenn der erste Spannungswert niedriger wird als ein dritter Spannungswert, der eine Schwellenspannung niedriger als der zweite Spannungswert ist, die Komparatorschaltung (114, 118) das erste Steuersignal ausgibt.

4. Klimaanlage (10) nach Anspruch 2 oder 3, wobei
das Antreiben der Last (3, 6) gestoppt wird durch
eine Steuerschaltung (104, 105, 108), umfassend ein Inverter-Modul (104), um den Gleichstrom in Wechselstrom umzuwandeln, und den Wechselstrom der Last (3, 6) zuzuführen, und
die Steuerspannungs-Zuführungsschaltung (117) die Zufuhr der Steuerspannung (112) zu dem Inverter-Modul (104) unterbricht, wenn das zweite Steuersignal erworben wird.

5. Klimaanlage (10) nach Anspruch 2 oder 3, wobei
das Antreiben der Last (3, 6) gestoppt wird durch:
die Steuerschaltung (104, 105, 108), umfassend:
ein Inverter-Modul (104), um Gleichstrom in Wechselstrom umzuwandeln und den Wechselstrom zu der Last (3, 6) zuzuführen, und
eine Inverter-Steuereinheit, um das Inverter-Modul (104) zu steuern, und
die Steuerspannungs-Zuführungsschaltung (117) die Zufuhr der Steuerspannung (112) zu der Inverter-Steuereinheit unterbricht, wenn das zweite Steuersignal erworben wird.

6. Klimaanlage (10) nach Anspruch 5, wobei
wenn die Steuerspannungs-Zuführungsschaltung (117) das erste Steuersignal nach Erwerben des zweiten Steuersignals erwirbt, die Steuerspannungs-Zuführungsschaltung (117) die Steuerspannung (112) zu der Inverter-Steuereinheit zuführt, und
wenn die Steuerspannung (112) nach Unterbrechung der Zuführung zu der Steuerspannung (112) zugeführt wird, die Inverter-Steuereinheit einen anfänglichen Startprozess durch Power-on-Reset durchführt.

## Revendications

1. Climatiseur (10), comprenant :
un circuit de conversion de puissance (2, 102, 103) destiné à convertir une puissance en courant alternatif en une puissance en courant continu ;
un circuit d'attaque (104, 105, 108) destiné à convertir la puissance en courant continu en une puissance en courant alternatif, à fournir la puissance en courant alternatif à une charge (3, 6) et à commander le fonctionnement de la charge (3, 6) ;
une unité de détection de température (4, 5) destinée à détecter une température d'enveloppe de la charge (3, 6) et à fournir en sortie une valeur de détection sur la base de la température d'enveloppe ;
un circuit de conversion (115, 116, 116a) destiné à convertir la valeur de détection en une première valeur de tension ;
un circuit de comparaison (114, 118) destiné à comparer la première valeur de tension à une deuxième valeur de tension qui correspond à une tension de seuil, et à fournir en sortie un signal de commande basé sur une différence de potentiel entre la première valeur de tension et la deuxième valeur de tension ; et
un circuit de fourniture de tension de commande (117) configuré de manière à générer une tension de commande à fournir au circuit d'attaque (104, 105, 108) en utilisant la puissance en courant continu, et à commander la fourniture de la tension de commande (112) au circuit d'attaque (104, 105, 108), sur la base du signal de commande, dans laquelle
la charge est un moteur (6), et le circuit de fourniture de tension de commande (117) est configuré de sorte que,
sur la base d'une température d'enveloppe du moteur (6), l'excitation du moteur (6) est interrompue en coupant la fourniture de la tension de commande (112) au circuit d'attaque (104, 105, 108), ou le moteur (6) est excité en fournissant la tension de commande (112) au circuit d'attaque (104, 105, 108),
dans lequel le circuit de conversion (115, 116, 116a) fournit en sortie la première valeur de tension à une unité de commande d'unité extérieure (106) qui commande le fonctionnement d'une unité extérieure (400a, 400c) sur laquelle le moteur (6) est monté, et au circuit de comparaison (114, 118).

2. Climatiseur (10) selon la revendication 1, dans lequel :
lorsque la première valeur de tension est inférieure à la deuxième valeur de tension, le circuit de comparaison (114) fournit en sortie un premier signal de commande qui est un signal de commande donnant instruction de fournir la tension de commande (112), et lorsque la première valeur de tension est égale ou supérieure à la deuxième valeur de tension, le circuit de comparaison (114) fournit en sortie un deuxième signal de commande qui est un signal de commande donnant instruction de couper la fourniture de la tension de commande (112).

3. Climatiseur (10) selon la revendication 1, dans lequel,
après que l'acquisition de la première valeur de tension à partir du circuit de conversion (115, 116) ait commencé :
lorsque la première valeur de tension est inférieure à la deuxième valeur de tension, le circuit de comparaison (114, 118) fournit en sortie un premier signal de commande qui est un signal de commande donnant instruction de fournir la tension de commande (112) ;
lorsque la première valeur de tension est égale ou supérieure à la deuxième valeur de tension, le circuit de comparaison (114, 118) fournit en sortie un deuxième signal de commande qui est un signal de commande donnant instruction de couper la fourniture de la tension de commande (112) ; et
après la fourniture en sortie du deuxième signal de commande, lorsque la première valeur de tension devient inférieure à une troisième valeur de tension qui est une tension de seuil inférieure à la deuxième valeur de tension, le circuit de comparaison (114, 118) fournit en sortie le premier signal de commande.

4. Climatiseur (10) selon la revendication 2 ou 3, dans lequel
l'excitation de la charge (3, 6) est interrompue par le fait que :
le circuit d'attaque (104, 105, 108) comprend un module d'onduleur (104) destiné à convertir la puissance en courant continu en une puissance en courant alternatif et à fournir la puissance en courant alternatif à la charge (3, 6) ; et
le circuit de fourniture de tension de commande (117) coupe la fourniture de la tension de commande (112) au module d'onduleur (104) lors de l'acquisition du deuxième signal de commande.

5. Climatiseur (10) selon la revendication 2 ou 3, dans lequel
l'excitation de la charge (3, 6) est interrompue par le fait que :
le circuit d'attaque (104, 105, 108) comprend
un module d'onduleur (104) destiné à convertir une puissance en courant continu en une puissance en courant alternatif et à fournir la puissance en courant alternatif à la charge (3, 6) ; et
une unité de commande d'onduleur destinée à commander le module d'onduleur (104) ; et
le circuit de fourniture de tension de commande (117) coupe la fourniture de la tension de commande (112) à l'unité de commande d'onduleur lors de l'acquisition du deuxième signal de commande.

6. Climatiseur (10) selon la revendication 5, dans lequel :
lorsque le circuit de fourniture de tension de commande (117) acquiert le premier signal de commande après avoir acquis le deuxième signal de commande, le circuit de fourniture de tension de commande (117) fournit la tension de commande (112) à l'unité de commande d'onduleur ; et
lorsque la tension de commande (112) est fournie après que la fourniture de la tension de commande (112) a été coupée, l'unité de commande d'onduleur met en oeuvre un processus de démarrage initial par réinitialisation de mise sous tension.
